# EUROPÄISCHE PATENTANMELDUNG

(11) **EP 2 441 560 A1**
(43) Veröffentlichungstag der Anmeldung: **18.04.2012**
(21) Anmeldenummer: 11008333.4
(22) Anmeldetag: 17.10.2011
(51) Int. Cl.: B29C 47/22, B29C 47/90, B29C 47/20, B29C 47/12

(54) **Verstellbares Extrusionswerkzeug**

(30) Priorität: 15.10.2010 DE 202010014366 U
(71) Anmelder: Jarus GmbH, 83026 Rosenheim (DE)
(72) Erfinder: Schuster, Rudolf, 85551 Kirchheim (DE); Altenburger, Joseph, 83026 Rosenheim (DE)
(74) Vertreter: Zeitler - Volpert - Kandlbinder

(57) **Zusammenfassung**

Die Erfindung bezieht sich auf ein verstellbares Extrusionswerkzeug für Kunststoffrohre bzw. Kunststoffschläuche, wobei das Extrusionswerkzeug aus n gegeneinander bewegbaren Werkzeugteilen (2a, 2b, 2c...) besteht, die jeweils einen Winkel α = 360/n ° aufweisen, wobei deren Winkelschenkel zueinander in Berührung stehen, die Werkzeugteile verfügen jeweils über wenigstens einen Materialeintritt und einen Materialaustrittsbereich, die Bewegungsrichtung der Werkzeugteile beim Verstellen derselben ist senkrecht zur Winkelhalbierenden des Winkels α, der Materialaustrittsbereich weist abhängig von der Position der Werkzeugteile zueinander eine veränderliche Lage auf.

## Beschreibung

Die Erfindung betrifft ein verstellbares Extrusionswerkzeug gemäß dem Oberbegriff des Anspruchs 1.

In der heutigen Wirtschaft sind Kunststoffschläuche bzw. -rohre weit verbreitet im Einsatz und werden mit Extrudern wirtschaftlich in großen Mengen hergestellt. Dabei wird erwärmtes Kunststoffgranulat oder -pulver unter Druck durch ein Werkzeug gepresst. Nach dem Herausfließen des Strangpressproduktes aus dem Werkzeug wird es über eine Kühlstrecke so weit abgekühlt, dass die Form stabil bleibt. Danach kann es bei spröden Materialien auf Länge geschnitten oder bei elastischen Materialien aufgewickelt werden.

Das Werkzeug, mit dem die Form des Rohres oder Schlauches hergestellt wird, ist für eine bestimmte Abmessung des Rohres oder Schlauches ausgelegt und muss bei einem Dimensionswechsel ausgetauscht werden. Mehrere Stunden Produktionsausfall sind die Folge.

Mit verschiedenen Maßnahmen können im begrenzten Maße Korrekturen vorgenommen werden, so z. B. durch Veränderung der Abzugsgeschwindigkeit. Ist die Abzugsgeschwindigkeit höher als die Extrusionsgeschwindigkeit, wird die Wandstärke dünner.

In der Patentschrift DE 10 2005 002 820 B3 ist eine stufenlos einstellbare Kalibrierhülse für extrudierte Kunststoffrohre beschrieben, mit der der Durchmesser aufgeweitet werden kann. Durch Aufweiten und Strecken des Materials werden die Moleküle des Kunststoffes ausgerichtet und z. B. Festigkeitseigenschaften beeinflusst. Durchmesseraufweitungen und Streckung der Länge sind deshalb nur in begrenztem Maße möglich.

Der vorliegenden Erfindung liegt die Aufgabe zugrunde, demgegenüber größere Durchmesserveränderungen während des Extrusionsvorganges ohne einen Wechsel des Extrusionswerkzeuges zu erreichen.

Die Lösung dieser Aufgabe erfolgt mit einem Extrusionswerkzeug mit den Merkmalen des Anspruchs 1.

Vorteilhafte Ausbildungen sind in den weiteren Ansprüchen beschrieben.

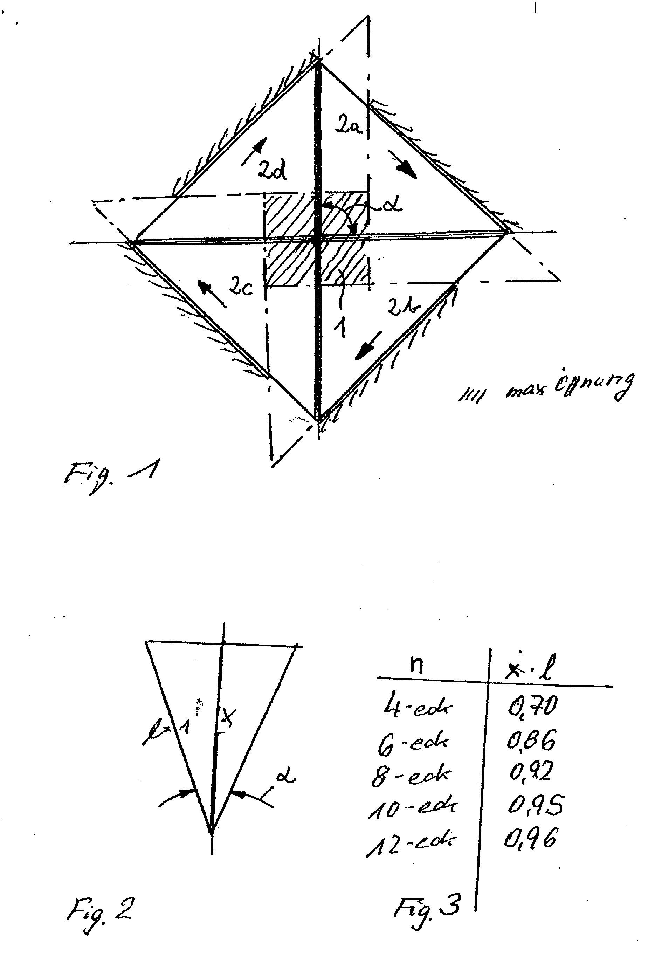

Die erfindungsgemäße Lösung wird anhand der Figuren 1 bis 7 erläutert.

In der Figur 1 wird ein Grundprinzip dargestellt, wie die Größe einer Öffnung 1 durch Verschieben von einzelnen Werkzeugteilen 2a bis 2d verändert werden kann. Die maximale Größe der Öffnung 1 ist als Schraffierung gezeichnet. Die Werkzeugteile 2a bis 2d befinden sich dabei in der durch Strich-Punktlinien markierten Lage. Um eine Verschiebung der Werkzeugteile zu ermöglichen, müssen alle Werkzeugteile gleichzeitig bewegt werden. Die Bewegung erfolgt dabei senkrecht zur Winkelhalbierenden des in Figur 1 gezeigten Winkels α, der abhängig von der Zahl n der bewegbaren Werkzeugteile gleich 360°/n ist.

In den Figuren 2 und 3 wird erläutert, wie sich die Anzahl der Werkzeugteile auf die Unrundheit auswirkt, da der Schwerpunkt der zu fertigenden Teile auf runden Formen liegt. Mit einer Anzahl von 12 Werkzeugteilen wird dabei bereits eine Annäherung an die Kreisform von besser als 5% erreicht.

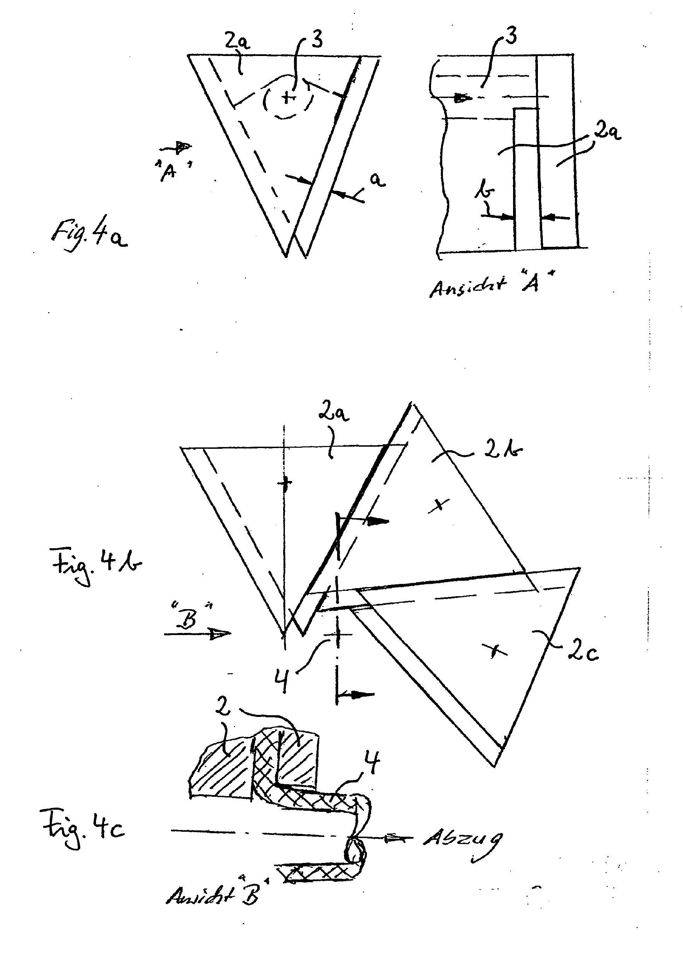

Figur 4 zeigt den prinzipiellen Aufbau der Werkzeugteile 2. Beim einzelnen Werkzeugteil nach Figur 4a ist mit 3 die Einlassöffnung bzw. der Einlasskanal für das verflüssigte Granulat dargestellt. Der Versatz a der beiden Dreieckformen in den Figuren 4a und 4b entspricht dabei der Differenz der Radien beim Auslasskanal wie in Figur 4c dargestellt.

In Figur 4b und 4c ist am Beispiel von 3 Dreieckswerkzeugteilen schematisch dargestellt, wie das Vieleckrohr 4 durch Abzug durch die Werkzeugteile 2 geformt wird. Durch gleichzeitiges Bewegen aller Werkzeugteile 2a, b, c.... in die Pfeilrichtung k bzw. g wird der Durchmesser des Vieleckrohres verkleinert bzw. vergrößert.

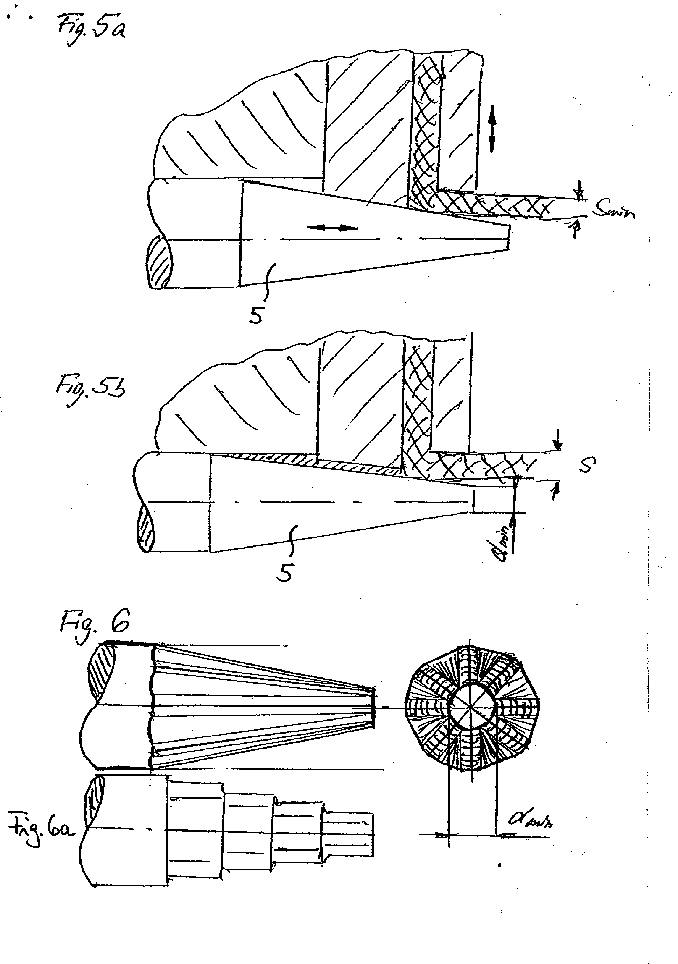

In Fig. 5a und 5b ist dargestellt, wie die Wandstärke s des zu fertigenden Teils durch Verschieben eines konusförmigen Teils 5 variiert werden kann, das gleichzeitig auch eine Abdichtfunktion des Werkzeugs entgegen der Abzugsrichtung ausübt. Alternativ dazu kann die Wandstärke s auch durch Variieren der in Figur 4a und c dargestellten Spaltbreite a veränderbar sein.

Figur 6 stellt die prinzipielle Gestaltungsmöglichkeit des konusförmigen Teils 5 für die Wandstärkenvariation dar. Figur 6a zeigt eine Gestaltungsmöglichkeit des Teils 5 mit stufenförmigen Durchmesseränderungen, die z. B. eine Abstufung des Rohrdurchmessers in 10mm-Stufen ermöglichen.

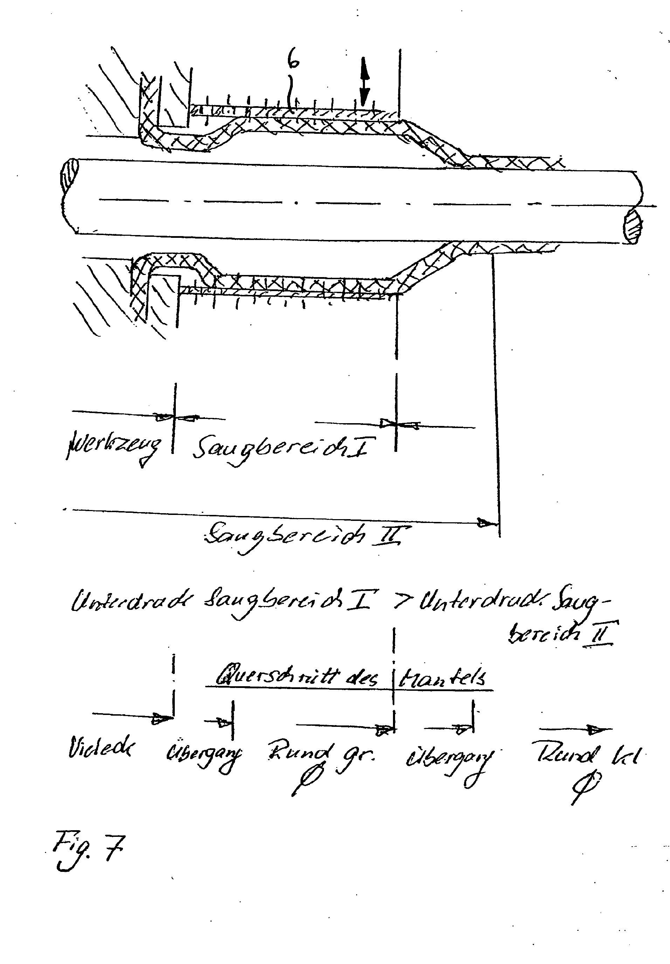

Figur 7 erklärt, wie z.B. das extrudierte Vieleckrohr in einem Saugbereich I in einem Vakuumsaugkorb 6 in eine runde Form gebracht und in einem Saugbereich II z. B. auf ein in Abzugsrichtung zugeführtes Vorprodukt (wärmeisoliertes Rohr etc.) aufgebracht werden kann.

Durch die Kombination von verstellbarem Extrusionswerkzeug und verstellbarem Vakuumsaugkorb 6 lassen sich Abmessungen und Materialeigenschaften in weiten Bereichen verändern.

## Patentansprüche

1. Verstellbares Extrusionswerkzeug für Kunststoffrohre bzw. Kunststoffschläuche, **gekennzeichnet durch** folgende Merkmale:
a) das Extrusionswerkzeug besteht aus n gegeneinander bewegbaren Werkzeugteilen (2a, 2b, 2c...), die jeweils einen Winkel α = 360/n ° aufweisen, wobei deren Winkelschenkel zueinander in Berührung stehen,
b) die Werkzeugteile verfügen jeweils über wenigstens einen Materialeintritt und einen Materialaustrittsbereich,
c) die Bewegungsrichtung der Werkzeugteile beim Verstellen derselben ist senkrecht zur Winkelhalbierenden des Winkels α,
d) der Materialaustrittsbereich weist abhängig von der Position der Werkzeugteile zueinander eine veränderliche Lage auf.

2. Extrusionswerkzeug nach Anspruch 1, **dadurch gekennzeichnet, dass** die Einstellung der Wandstärke des Kunststoffrohres durch einen eigenen verstellbaren Werkzeuginnenteil (5) erfolgt.

3. Extrusionswerkzeug nach Anspruch 1, **dadurch gekennzeichnet, dass** die Dicke (b) des Materialaustritts im Werkzeugteil veränderlich ist.

4. Extrusionswerkzeug nach Anspruch 1, **dadurch gekennzeichnet, dass** mindestens ein Materialaustritt (3) vorhanden ist und dass wenigstens bei einem Materialeintritt (3) die Durchflussmenge veränderbar ist.

5. Extrusionswerkzeug nach einem der Ansprüche 1 bis 4, **dadurch gekennzeichnet, dass** der Materialeintritt beim Verstellen des Werkzeuges relativ zum Werkzeug verstellbar ist.

6. Extrusionswerkzeug nach einem der Ansprüche 1 bis 5, **dadurch gekennzeichnet, dass** damit mehreckige Hohlprofile und Schläuche herstellbar sind.

7. Extrusionswerkzeug nach einem der Ansprüche 1 bis 5, **dadurch gekennzeichnet, dass** in Verbindung mit einem Saugkorb (6) runde Profile und Schläuche herstellbar sind.

8. Extrusionswerkzeug nach einem der Ansprüche 1 bis 5, **dadurch gekennzeichnet, dass** die Form der Werkzeugteile (2) so ausgebildet ist, dass bei der kleinsten einstellbaren Abmessung die Gesamtform aller Werkzeugteile einen Kreis ergibt.

9. Extrusionswerkzeug nach einem der Ansprüche 1 bis 5, **dadurch gekennzeichnet, dass** die Werkzeugteile (2) einen eigenen Heiz-Regelkreis besitzen.
